# EUROPÄISCHE PATENTANMELDUNG

(11) **EP 0 969 586 A2**
(43) Veröffentlichungstag der Anmeldung: **05.01.2000**
(21) Anmeldenummer: 99109380.8
(22) Anmeldetag: 02.06.1999
(51) Int. Cl.: H02M 7/48, H02M 7/521

(54) **Dreipunkt-Stromrichter und Verfahren zum Betrieb**

(30) Priorität: 02.07.1998 DE 19829856
(71) Anmelder: ABB Research Ltd., 8050 Zürich (CH)
(72) Erfinder: Bernet, Steffen, Dr.-Ing., 69245 Bammental (DE); Brückner, Thomas, 01809 Heidenau (DE); Steimer, Peter, 5424 Unterehrendingen (CH)
(74) Vertreter: Miller, Toivo

(57) **Zusammenfassung**

Es wird ein Dreipunkt-Stromrichter mit NPC-Dioden zwischen den Brückenhälften und der Mittelanzapfung des Zwischenkreises vorgeschlagen, bei dem ein Entkopplungsnetzwerk (1) für die obere Brückenhälfte vorgesehen ist, dessen erster Eingang am positiven Pol des Zwischenkreises liegt und dessen erster Ausgang mit dem positiven Pol des Dreipunkt-Stromrichters verbunden ist. Ferner ist ein Entkopplungsnetzwerk (2) für die untere Brückenhälfte vorgesehen, dessen zweiter Eingang am negativen Pol des Zwischenkreises liegt und dessen zweiter Ausgang mit dem negativen Pol des Dreipunkt-Stromrichters verbunden ist. Die übrigen Eingänge der Entkopplungsnetzwerke (1, 2) sind an die Mittelanzapfung (3) des Zwischenkreises angeschlossen. Die übrigen Ausgänge der Entkopplungsnetzwerke sind über die NPC-Dioden mit den Brückenhälften verbunden. Durch die Entkopplungsnetzwerke (1, 2) wird die Kommutierungsspannung für die Hauptschalter (T₁₁...T₃₄) in der oberen und der unteren Brückenhälfte unabhängig voneinander von der halben Zwischenkreisspannung (V_{dc}/2) entkoppelt.

## Beschreibung

Die Erfindung bezieht sich auf einen Dreipunkt-Stromrichter gemäß dem Oberbegriff des Anspruchs 1 sowie auf ein Verfahren zum Betrieb dieses Dreipunkt-Stromrichters. Die Erfindung gehört zum Gebiet der von einem Spannungszwischenkreis gespeisten Dreipunkt-Stromrichter. Derartige Stromrichter werden sowohl in elektrischen Antrieben als auch in Filter- und Kompensationsanlagen bei großen Leistungen verwendet. Die vorgeschlagene Beschaltung ist insbesondere eine Realisierungsmöglichkeit für Hochleistungsstromrichter im Mittelspannungsbereich.

Die Topologie des NPC (Neutral Point Clamped)-Dreipunkt-Stromrichters ist schon seit langer Zeit allgemein bekannt. Für den Bereich großer Leistungen wird sie auch industriell angewandt. Dabei finden IGBTs, GTO-Thyristoren oder Integrated Gate Commutated Thyristors (IGCT) als Hauptschalter Anwendung.

Bei Verwendung von GTO-Thyristoren muß der Stromanstieg di/dt beim Einschalten sowie der Spannungsanstieg du/dt beim Ausschalten über den Schaltern begrenzt werden. Beim Einsatz von IGCTs muß nur der Stromanstieg di/dt begrenzt werden. Zu diesen Zweck werden Schaltentlastungs-Netzwerke, sogenannte Snubber, in der Schaltung angeordnet, welche die genannten Begrenzungen gewährleisten und dadurch in der Regel die Schaltverluste in den Schaltern reduzieren.

Einige Beispiele für derartige Anordnungen sind in Suh, J.-H. et al: A New Snubber Circuit for High Efficiency and Overvoltage Limitation in Three Level GTO Inverters, IEEE Trans. On Industrial Electronics, Vol. 44, No. 2, April 1997 beschrieben. Die Begrenzung von Spannungs- und Stromanstieg wird prinzipiell durch zu den Schaltern parallel geschaltete Kapazitäten bzw. in Reihe geschaltete Induktivitäten sowie stets notwendige zusätzliche aktive und/oder passive Bauelemente erreicht. Bei Verwendung von GTO-Thyristoren sind diese Beschaltungen im allgemeinen für jeden GTO oder für jede Phase separat auszuführen. Der Aufwand an aktiven und passiven Komponenten ist daher hoch. Sowohl bei konventionellen RCD-Snubbern als auch bei der vorgeschlagenen verbesserten Variante wird die gesamte im Snubber gespeicherte Energie über Widerstände in Wärme umgesetzt. Probleme, die beim Einsatz konventioneller RCD-Snubber auftreten, wie Überspannungen über den GTO-Thyristoren (verursacht durch die Reihen-Induktivitäten) und ungleiche Blockierspannungsverteilung zwischen den GTOs, können auch mit dem zuvor genannten verbesserten Snubber nur verkleinert, nicht aber gelöst werden.

Ein Beispiel für einen industriell gefertigten Snubber wird in Komulainen, R.: Inverter Protected in Respect of the Rates of Increase of Current And Voltage, US Patent No. 4.566.051, January 21, 1986 beschrieben. In dieser Schaltung wird die gesamte in den Entlastungsinduktivitäten und Entlastungskapazitäten gespeicherte Energie (Snubberenergie) in den Gleichspannungszwischenkreis zurückgespeist. Dies erfordert jedoch einen hohen schaltungstechnischen Aufwand.

Ein weiterer Nachteil aller bekannten Schaltentlastungsnetzwerke für Dreipunkt-Stromrichter ist, daß die Schaltverluste durch die hohe Kommutierungsspannung (halbe Zwischenkreisspannung im Dreipunkt-Stromrichter) nur begrenzt und mit hohem Bauelementeaufwand reduziert werden können.

Für die Topologie der Zweipunkt-Stromrichter sind neben den ebenfalls angewandten vielfältigen Snubber-Schaltungen auch Prinzipien bekannt, bei denen verlustarmes Schalten durch eine Kommutierungsspannung von nahezu null erreicht wird. Dazu wird zwischen die Zwischenkreiskapazität und die Brückenzweige des Stromrichters ein elektrisches Netzwerk zur vorübergehenden Entkopplung der Kommutierungsspannung von der Zwischenkreisspannung während der Schaltvorgänge eingebaut, wie z. B. in Salama, S, Tadros, Y.: Quasi Resonant 3-Phase IGBT Inverter, IEEE-PESC Conference Records, 1995 beschrieben. Die Kommutierungsspannung kann dabei über einen resonanten Vorgang nahezu zu null schwingen.

Zusammenfassend ist festzustellen, daß die in den konventionellen NPC-Dreipunkt-Stromrichtern bisher angewendeten Snubber-Schaltungen aufgrund ihres Funktionsprinzips nur eine begrenzte Schaltverlustreduktion in den Hauptschaltern gewährleisten. In vielen Snubbern wird die Snubber-Energie nicht in den Gleichspannungszwischenkreis zurückgespeist, sondern in den Schaltern und der Beschaltung in Verlustwärme umgesetzt. Weiterhin sind der Bauelementeaufwand und die Kosten der konventionellen Schaltentlastungen erheblich.

Der Erfindung liegt die Aufgabe zugrunde, einen Dreipunkt-Stromrichter der eingangs genannten Art anzugeben, mit dem ein sehr verlustarmes Schalten der Hauptschalter im Dreipunkt-Stromrichter realisiert wird. Des weiteren soll ein Verfahren zum Betrieb des Dreipunkt-Stromrichters angegeben werden.

Diese Aufgabe wird bezüglich des Dreipunkt-Stromrichters in Verbindung mit den Merkmalen des Oberbegriffes erfindungsgemäß durch die im Kennzeichen des Anspruchs 1 angegebenen Merkmale gelöst.

Diese Aufgabe wird bezüglich des Verfahrens zum Betrieb des Dreipunkt-Stromrichters in Verbindung mit den Merkmalen des Oberbegriffes erfindungsgemäß durch die im Kennzeichen des Anspruchs 4 angegebenen Merkmale gelöst.

Die mit der Erfindung erzielbaren Vorteile bestehen insbesondere darin, daß die vorstehend genannten Nachteile - beispielsweise Erzeugung von Verlustwärme, hoher Bauelementeaufwand, hohe Kosten - der Snubber für Dreipunkt-Stromrichter vermieden werden. Die Erfindung beinhaltet die Anwendung der Entkopplung der Kommutierungsspannung von der Zwischenkreisspannung durch zwei getrennte Beschaltungen in Form der Entkopplungsnetzwerke für die obere und die untere Brückenhälfte im Dreipunkt-Stromrichter in separater Weise. Beide Entkopplungsnetzwerke arbeiten völlig unabhängig voneinander. Sie gewährleisten für ihre jeweilige Brückenhälfte eine Kommutierungsspannung von nahezu null, während an der anderen Brückenhälfte die halbe Zwischenkreisspannung anliegt. Die Schaltung weist insgesamt einen moderaten Aufwand an aktiven und passiven Bauelementen auf.

Die Begrenzung von Stromanstieg di/dt und Spannungsanstieg du/dt ist zuverlässig gewährleistet. Zusätzlich bietet die Schaltung Schutz für den Kurzschlußfall der Hauptschalter, indem der Kurzschlußstromanstieg begrenzt wird.

Wie bereits angemerkt, ist eine unabhängige Kommutierung in der oberen und der unteren Brückenhälfte möglich. Dies gestattet vorteilhaft auch direkte Kommutierungen von der oberen auf die untere Brückenhälfte "positive Spannung zu negativer Spannung" und zurück.

Die Erfindung wird nachstehend anhand der in der Zeichnung dargestellten Ausführungsbeispiele erläutert. Es zeigen:
- Fig. 1: ein dreiphasiges Prinzipschaltbild des Dreipunkt-Stromrichters,
- Fig. 2: ein Prinzipschaltbild mit Aufbau der Entkopplungsnetzwerke,
- Fig. 3: ein einphasiges Schaltbild zur Erläuterung der Kommutierungen,
- Fig. 4a-k: die Kommutierung von T₁₁ nach D₁₅,
- Fig. 5a-k: die Kommutierung von D₁₅ und T₁₂ nach D₁₄ und D₁₃,
- Fig. 6a-m: die Kommutierung von D₁₄ und D₁₃ nach D₁₅ und T₁₂,
- Fig. 7a-m: die Kommutierung von D₁₅ nach T₁₁,
- Fig. 8a-k: die Kommutierung von T₁₁ und T₁₂ nach D₁₄ und D₁₃,
- Fig. 9a-m: die Kommutierung von D₁₄ und D₁₃ nach T₁₁ und T₁₂.

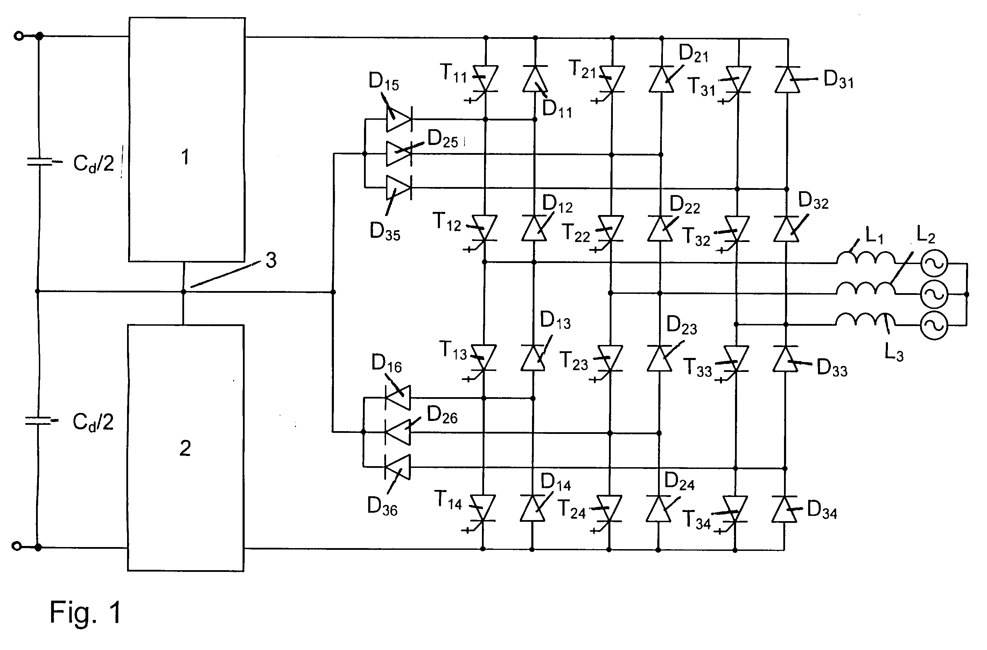

In Fig. 1 ist ein dreiphasiges Prinzipschaltbild des Dreipunkt-Stromrichters dargestellt. Die aus den Hauptschaltern T₁₁, T₁₂ und Inversdioden D₁₁, D₁₂ (Inversdioden = antiparallele Dioden) der oberen Brückenhälfte der ersten Phase, den Hauptschaltern T₁₃, T₁₄ und Inversdioden D₁₃, D₁₄ der unteren Brückenhälfte der ersten Phase, den Hauptschaltern T₂₁, T₂₂ und Inversdioden D₂₁, D₂₂ der oberen Brückenhälfte der zweiten Phase, den Hauptschaltern T₂₃, T₂₄ und Inversdioden D₂₃, D₂₄ der unteren Brückenhälfte der zweiten Phase, den Hauptschaltern T₃₁, T₃₂ und Inversdioden D₃₁, D₃₂ der oberen Brückenhälfte der dritten Phase sowie den Hauptschaltern T₃₃, T₃₄ und Inversdioden D₃₃, D₃₄ der unteren Brückenhälfte der dritten Phase bestehende Dreiphasen-Brückenschaltung ist ausgangsseitig mit einer Last beschaltet, wobei die Lastinduktivitäten mit L₁, L₂, L₃ bezeichnet sind.

Eingangsseitig liegt die Dreiphasen-Brückenschaltung an einem Entkopplungsnetzwerk 1 der oberen Brückenhälfte und einem Entkopplungsnetzwerk 2 der unteren Brückenhälfte. Das Entkopplungsnetzwerk 1 ist mit dem positiven Pol eines Zwischenkreises und einer Mittelanzapfung 3 dieses Zwischenkreises verbunden. Das Entkopplungsnetzwerk 2 ist mit dem negativen Pol des Zwischenkreises und der Mittelanzapfung 3 verbunden.

Die obere Brückenhälfte der ersten Phase ist über eine NPC-Diode D₁₅ (NPC-Diode = Neutral Point Clamped-Diode = Diode der Mittelanzapfung) mit der Mittelanzapfung 3 beider eingangsseitig in Reihe liegenden Zwischenkreiskapazitäten C_{d}/2 verbunden. Die untere Brückenhälfte der ersten Phase liegt über einer NPC-Diode D₁₆ an der Mittelanzapfung 3. Die obere Brückenhälfte der zweiten Phase ist über eine NPC-Diode D₂₅ mit der Mittelanzapfung 3 beider eingangsseitig in Reihe liegenden Zwischenkreiskapazitäten C_{d}/2 verbunden. Die untere Brückenhälfte der zweiten Phase liegt über einer NPC-Diode D₂₆ an der Mittelanzapfung 3. Die obere Brückenhälfte der dritten Phase ist über eine NPC-Diode D₃₅ mit der Mittelanzapfung 3 beider eingangsseitig in Reihe liegenden Zwischenkreiskapazitäten C_{d}/2 verbunden. Die untere Brückenhälfte der dritten Phase liegt über einer NPC-Diode D₃₆ an der Mittelanzapfung 3.

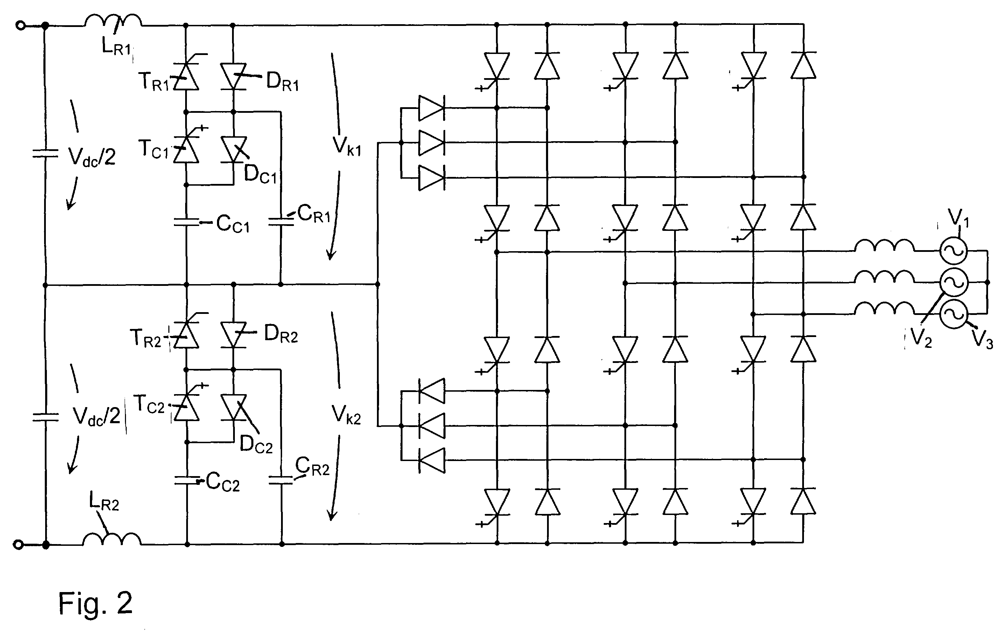

In Fig. 2 ist ein Prinzipschaltbild mit Aufbau der Entkopplungsnetzwerke dargestellt. Das Entkopplungsnetzwerk 1 weist eine resonante Induktivität L_{R1} auf, welche mit dem postiven Pol des Zwischenkreises verbunden ist. An den Verbindungspunkt dieser Induktivität L_{R1} mit der oberen Brückenhälfte sind ein Schalter T_{R1} und eine Inversdiode D_{R1} angeschlossen. Die weiteren Anschlüsse dieser beiden Baukomponenten sind mit einem Schalter T_{C1}, einer Inversdiode D_{C1} und über einer resonanten Kapazität C_{R1} mit der Mittelanzapfung 3 verbunden. Die weiteren Anschlüsse von Schalter T_{C1} und Inversdiode D_{C1} liegen über einer Ladekapazität C_{C1} an der Mittelanzapfung 3.

Das Entkopplungsnetzwerk 2 weist eine resonante Induktivität L_{R2} auf, welche mit dem negativen Pol des Zwischenkreises verbunden ist. An den Verbindungspunkt dieser Induktivität L_{R2} mit der unteren Brückenhälfte sind eine Ladekapazität C_{C2} und eine resonante Kapazität C_{R2} angeschlossen. Der weitere Anschluß der Ladekapazität C_{C2} ist mit einem Schalter T_{C2} und einer Inversdiode D_{C2} verbunden. Die weiteren Anschlüsse von Schalter T_{C2} und Inversdiode D_{C2} sind mit dem weiteren Anschluß der resonanten Kapazität C_{R2} sowie einem Schalter T_{R2} und einer Inversdiode D_{R2} verbunden. Schalter T_{R2} und Inversdiode D_{R2} sind andererseits an die Mittelanzapfung 3 angeschlossen.

Die halben Zwischenkreisspannungen über den Zwischenkreiskapazitäten sind mit V_{dc}/2, die Spannungen an den Entkopplungsnetzwerken 1 bzw. 2 sind mit Vₖ₁ bzw. Vₖ₂ und die Spannungen an der Last sind mit V₁, V₂, V₃ bezeichnet.

Die Funktionsweise der Entkopplung der Kommutierungsspannung von der Zwischenkreisspannung durch zwei getrennte Beschaltungen in Form der dreipoligen Entkopplungsnetzwerke 1 und 2 für die obere und die untere Brückenhälfte im Dreipunkt-Stromrichter wird nachfolgend am Beispiel der Schaltung in Fig. 2 detailliert erläutert. Die zusätzlichen passiven Elemente der beiden Schaltungen sind die großen Ladekapazitäten C_{C1} und C_{C2}, deren Spannungen auf einen Wert 1.2*V_{dc}/2 nahezu konstant gehalten werden, sowie die resonanten Induktivitäten L_{R1} und L_{R2} und die resonanten Kapazitäten C_{R1} und C_{R2}, welche im Ruhezustand auf die Spannungen der Ladekapazitäten C_{C1} bzw. C_{C2} aufgeladen sind. Im Gegensatz zu der in Salama, S, Tadros, Y.: Quasi Resonant 3-Phase IGBT Inverter, IEEE-PESC Conference Records, 1995 beschriebenen Schaltung erfolgt die Kommutierung stets über eine NPC-Diode. Die Schaltungen werden so gesteuert, daß bei Kommutierungen von der oberen Brückenhälfte auf die Mittelanzapfung und zurück "positive Spannung + ↔ Nullspannung 0" das obere Entkopplungsnetzwerk 1, für Kommutierungen von der Mittelanzapfung auf die untere Brückenhälfte und zurück "Nullspannung 0 ↔ negative Spannung -" das untere Entkopplungsnetzwerk 2 genutzt wird.

Da die Kommutierungsvorgänge in der oberen und unteren Brückenhälfte entkoppelt sind, können gleichzeitige Kommutierungsvorgänge in verschiedenen Phasen des Stromrichters stattfinden. Dies gestattet auch gemeinsame Kommutierungen in oberer und unterer Brückenhälfte in einer Phase "positive Spannung + ↔ negative Spannung-".

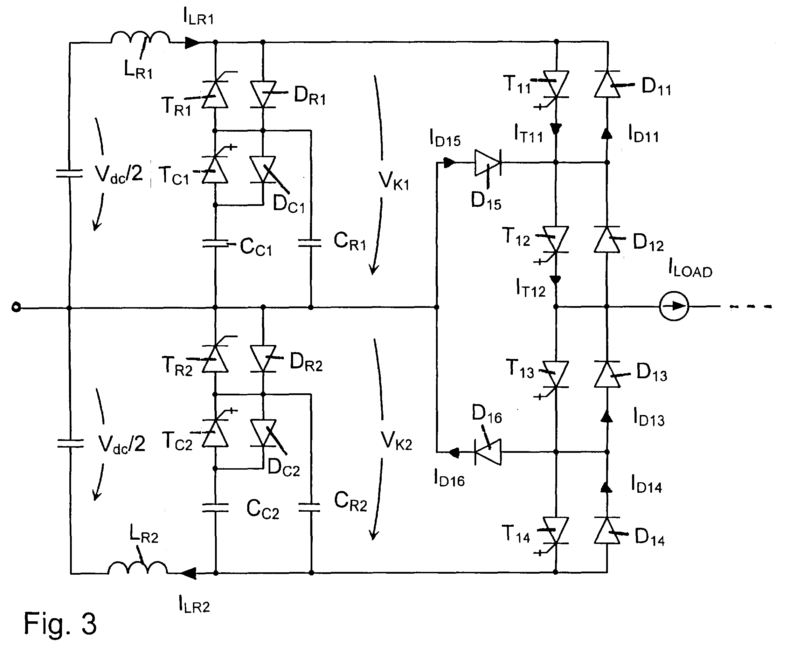

Zur Erläuterung der Kommutierungen wird die einphasige Schaltung in Fig. 3 verwendet. Dabei sind der Strom I_{LR1} durch L_{R1}, der Strom I_{LR2} durch L_{R2}, der Strom I_{T11} durch T₁₁, der Strom I_{T12} durch T₁₂, der Strom I_{D11} durch D₁₁, der Strom I_{D13} durch D₁₃, der Strom I_{D14} durch D₁₄, der Strom I_{D15} durch D₁₅, der Strom I_{D16} durch D₁₆ und der Laststrom I_{LOAD} jeweils angegeben. Es existieren acht verschiedene elementare Kommutierungen, und zwar vier bei positivem Laststrom I_{LOAD}
(a) von T₁₁ nach D₁₅,
(b) von T₁₂ und D₁₅ nach D₁₃ und D_{14,}
(c) von D₁₃ und D₁₄ nach T₁₂ und D₁₅,
(d) von D₁₅ nach T₁₁,
   sowie vier bei negativem Laststrom I_{LOAD}
(e) von D₁₁ und D₁₂ nach T₁₃ und D₁₆,
(f) von D₁₆ nach T₁₄,
(g) von T₁₄ nach D₁₆,
(h) von T₁₃ und D₁₆ nach D₁₁ und D₁₂.

Die Kommutierung (e) ist analog zur Kommutierung (c), ebenso (f) zu (d), (g) zu (a) und (h) zu (b). Aus diesem Grund müssen nur die Kommutierungsvorgänge (a) bis (d) erläutert werden. Bei der folgenden Beschreibung wird von einem großen Laststrom ausgegangen. Bei kleinen Lastströmen ändern sich teilweise die Leitintervalle zwischen Hauptschaltern und antiparallelen Dioden (Inversdioden) bzw. den Dioden der Mittelanzapfung (NPC-Dioden). Das Prinzip der Kommutierung bleibt davon unbeeinflußt.

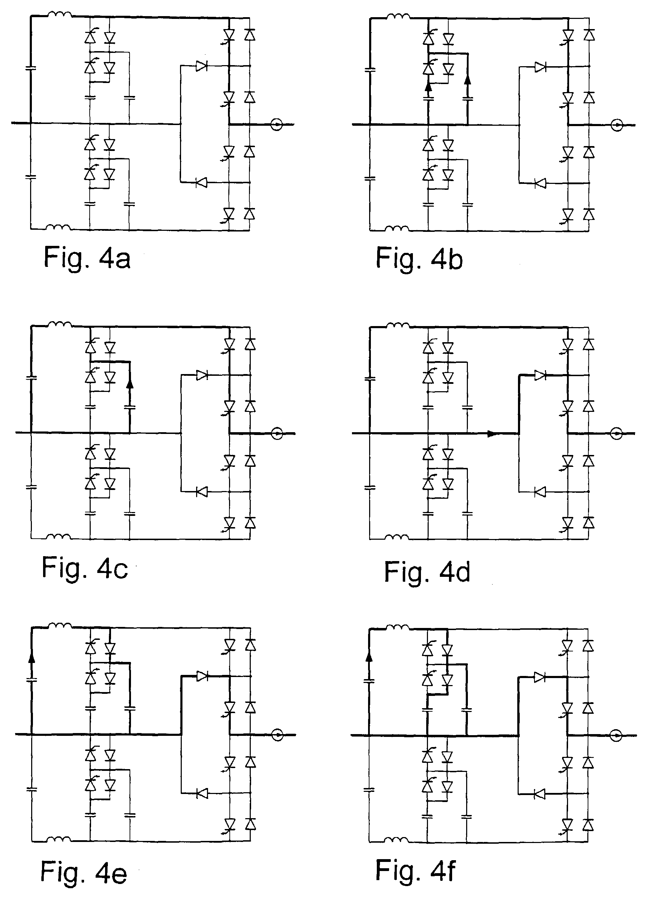

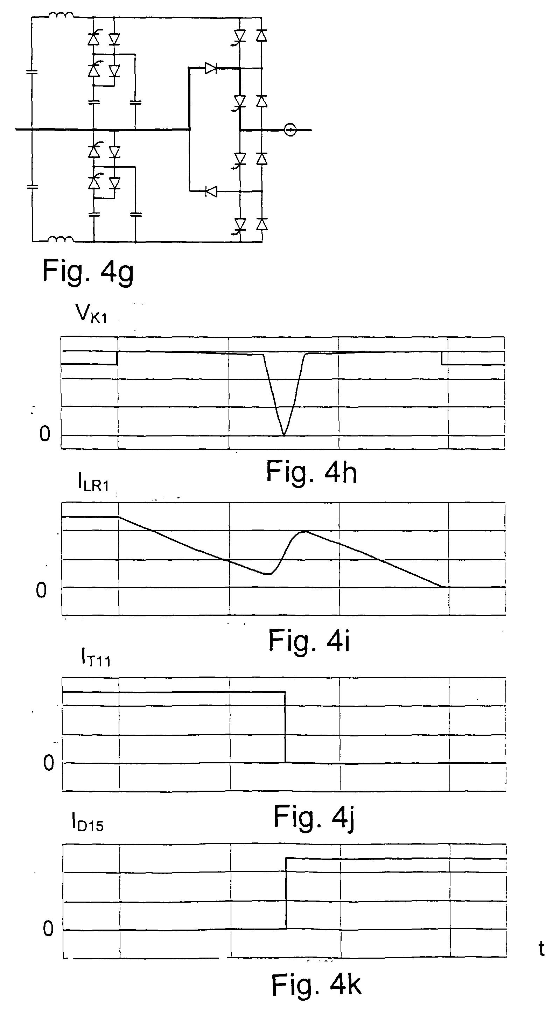

Für den Kommutierungsvorgang (a) wird das Entkopplungsnetzwerk 1 der oberen Brückenhälfte angewendet. Der Ablauf der Kommutierung und wesentliche Strom- und und Spannungsverläufe sind in den Fig. 4a-k dargestellt. Im einzelnen gilt folgendes:
- Fig. 4a:: Vor der Kommutierung
- Fig. 4b:: Resonate Induktivität L_{R1} laden
- Fig. 4c:: Resonanter Entladevorgang von C_{R1}
- Fig. 4d:: Linearer Abbau des resonanten Stromes über eine NPC-Diode vor dem Ausschalten von T₁₁
- Fig. 4e: Resonanter Ladevorgang von C_{R1}
- Fig. 4f: Entladen der resonanten Induktivität L_{R1}
- Fig. 4g:: Nach abgeschlossener Kommutierung
- Fig. 4h:: Spannungsverlauf von Vₖ₁
- Fig. 4i:: Stromverlauf von I_{LR1}
- Fig. 4j:: Stromverlauf von I_{T11}
- Fig. 4k:: Stromverlauf von I_{D15}

Die Kommutierung wird gestartet, indem die Schalter T_{C1} und T_{R1} eingeschaltet werden und daraufhin L_{R1} durch C_{C1} nahezu linear geladen wird. Nach dem Ausschalten von T_{C1} beginnt ein Schwingungsvorgang zwischen L_{R1} und C_{R1}. Nachdem die Spannung über C_{R1} null erreicht hat, kommutiert der resonante Strom von C_{R1} und T_{R1} auf D₁₅ und T₁₁. Jetzt ist die Kommutierungsspannung null und T₁₁ kann verlustarm ausgeschaltet werden. Der Laststrom kommutiert nahezu augenblicklich - d. h. nur durch parasitäre Induktivitäten in Schalter und Diode begrenzt - von T₁₁ auf die Diode D₁₅ sowie der Strom I_{LR1} auf D_{R1} und C_{R1}. Der Spannungsanstieg über T₁₁ wird somit durch C_{R1} begrenzt. In dem sich anschließenden Rückschwingvorgang wird die Kapazität C_{R1} auf die Spannung von C_{C1} aufgeladen und abschließend der Strom in L_{R1} durch C_{C1} bis null abgebaut. Damit ist der Kommutierungsvorgang beendet.

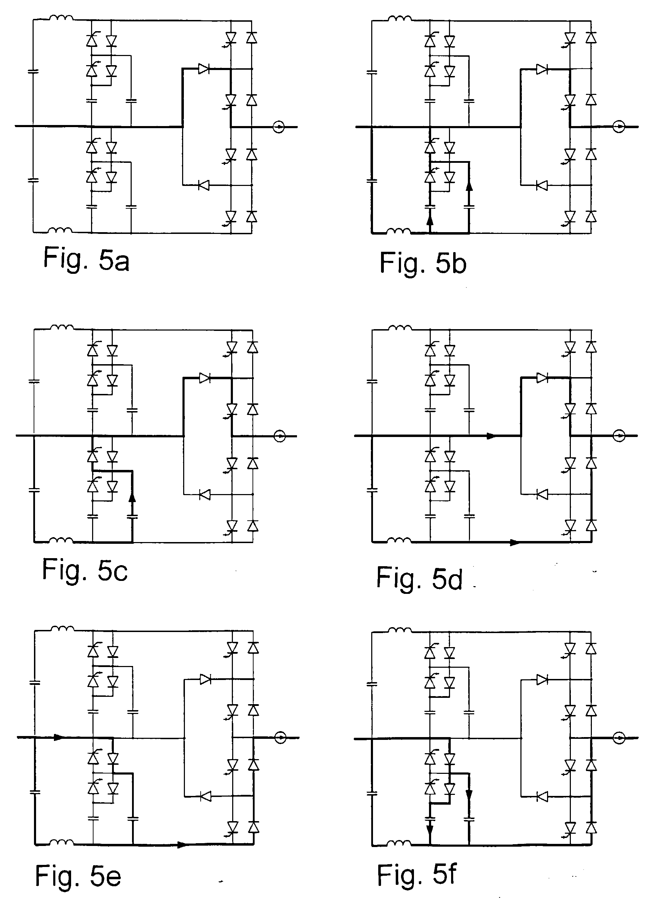

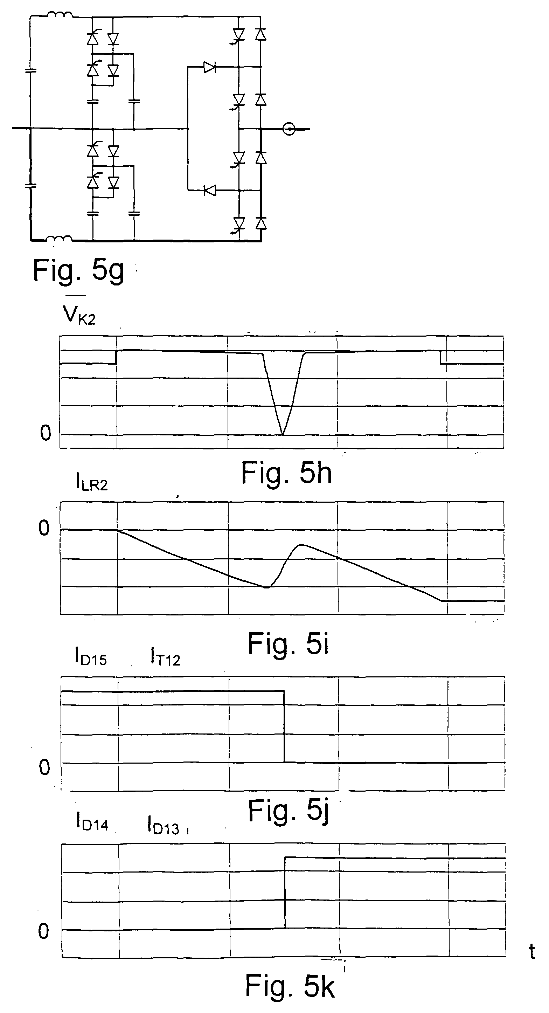

Die Kommutierung (b) wird mit Hilfe des Entkopplungsnetzwerkes 2 der unteren Brückenhälfte durchgeführt. Der Ablauf der Kommutierung und wesentliche Strom- und Spannungsverläufe sind in den Fig. 5a-k dargestellt. Im einzelnen gilt folgendes:
- Fig. 5a:: Vor der Kommutierung
- Fig. 5b:: Resonate Induktivität L_{R2} laden
- Fig. 5c:: Resonanter Entladevorgang von C_{R2}
- Fig. 5d:: Linearer Abbau des resonanten Stromes über eine NPC-Diode vor dem Ausschalten von T₁₂
- Fig. 5e: Resonanter Ladevorgang von C_{R2}
- Fig. 5f: Entladen der resonanten Induktivität L_{R2}
- Fig. 5g:: Nach abgeschlossener Kommutierung
- Fig. 5h:: Spannungsverlauf von Vₖ₂
- Fig. 5i:: Stromverlauf von I_{LR2}
- Fig. 5j:: Stromverlauf von I_{T12} und I_{D15}
- Fig. 5k:: Stromverlauf von I_{D14} und I_{D13}

Nach dem Einschalten von T_{C2} und T_{R2} wird durch L_{R2} nahezu linear ein Strom aufgebaut, aufgrund dessen nach dem Ausschalten von T_{C2} die Spannung über C_{R2} in einem resonanten Vorgang mit L_{R2} zu null schwingt. Nach dem zu null werden der Spannung über C_{R2} kommutiert der resonante Strom von C_{R2} und T_{R2} auf den Pfad D₁₄, D₁₃, T₁₂ und D₁₅. Jetzt kann T₁₂ verlustarm ausgeschaltet werden. Der Laststrom kommutiert nahezu augenblicklich auf D₁₄ und D₁₃. Die Differenz aus Laststrom und resonantem Strom in L_{R2} unmittelbar vor dem Ausschalten von T₁₂ kommutiert im gleichen Augenblick auf D_{R2} und C_{R2} und bildet somit die Anfangsbedingung für den folgenden Rückschwingvorgang, welcher C_{R2} auf die Spannung von C_{C2} lädt. Nach dem Abbau des resonanten Stromanteiles in L_{R2} durch C_{C2} ist der Kommutierungsvorgang abgeschlossen.

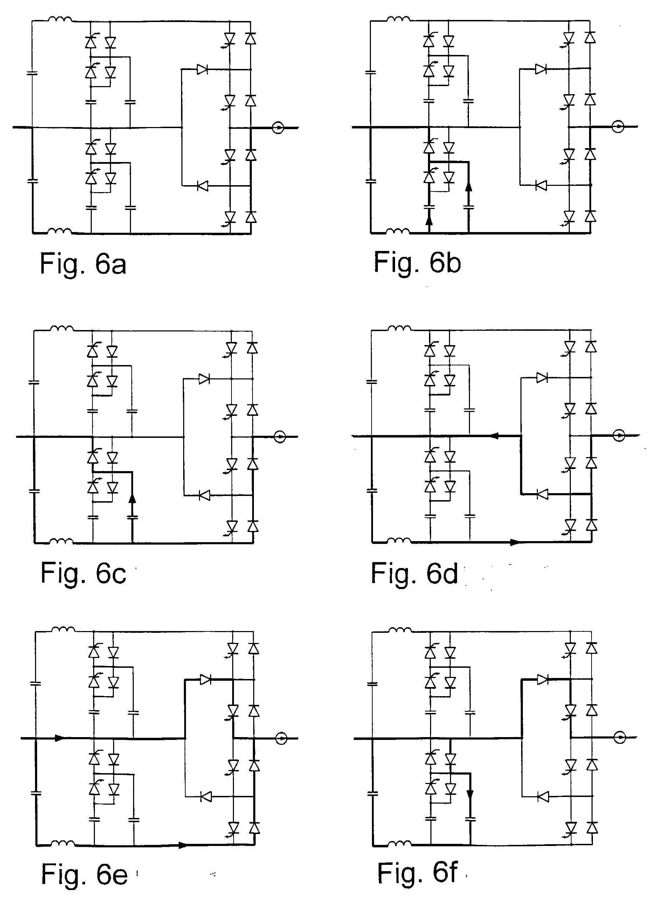

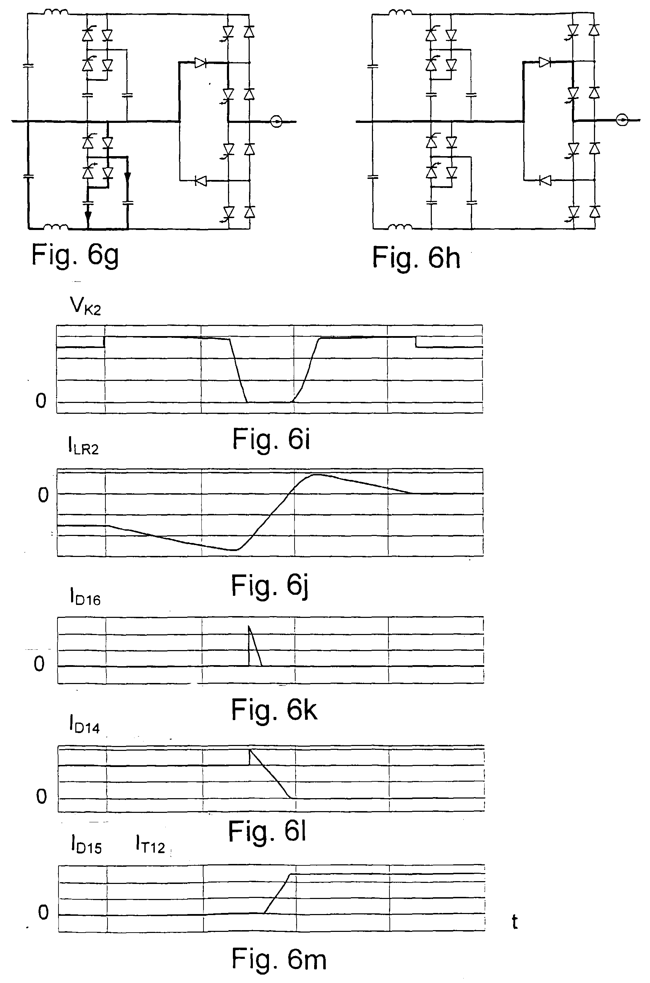

Die Kommutierung (c) wird mit Hilfe des Entkopplungsnetzwerkes 2 der unteren Brückenhälfte durchgeführt und mit dem Einschalten von T_{C2} und T_{R2} eingeleitet. Der Ablauf der Kommutierung und wesentliche Strom- und Spannungsverläufe sind in den Fig. 6a-m dargestellt. Im einzelnen gilt folgendes:
- Fig. 6a:: Vor der Kommutierung
- Fig. 6b:: Resonante Induktivität L_{R2} laden
- Fig. 6c:: Resonanter Entladevorgang von C_{R2}
- Fig. 6d:: Abbau des resonanten Stromes über eine NPC-Diode (Einschalten von T₁₂)
- Fig. 6e: Kommutierung des Laststromes
- Fig. 6f: Resonanter Ladevorgang von C_{R2}
- Fig. 6g: Entladen der resonanten Induktivität
- Fig. 6h:: Nach abgeschlossener Kommutierung
- Fig. 6i:: Spannungsverlauf von Vₖ₂
- Fig. 6j:: Stromverlauf von I_{LR2}
- Fig. 6k:: Stromverlauf von I_{D16}
- Fig. 6l:: Stromverlauf von I_{D14}
- Fig. 6m:: Stromverlauf von I_{D15} und I_{T12}

Es wird wiederum die Induktivität L_{R2} nahezu linear geladen. Nach dem Ausschalten von T_{C2} beginnt der resonante Vorgang, bei dem die Spannung über C_{R2} zu null schwingt. Mit dem Erreichen von Nullspannung kommutiert der resonante Strom von C_{R2} und T_{R2} auf D₁₄ und D₁₆ und wird linear abgebaut. Jetzt kann T₁₂ verlustarm eingeschaltet werden. Nach vollständigem Abbau des resonanten Stromes durch D₁₆ kommutiert der Laststrom begrenzt durch L_{R2} von D₁₄ und D₁₃ auf D₁₅ und T₁₂. Danach wird erst C_{R2} in einem resonanten Vorgang mit L_{R2} auf die Spannung von C_{C2} geladen und dann der Strom durch L_{R2} bis auf null abgebaut.

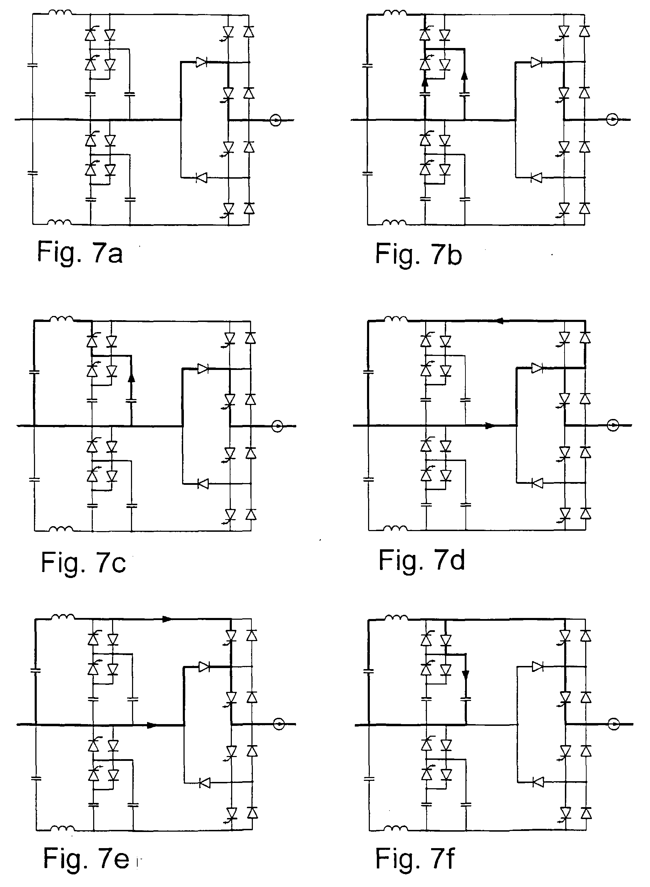

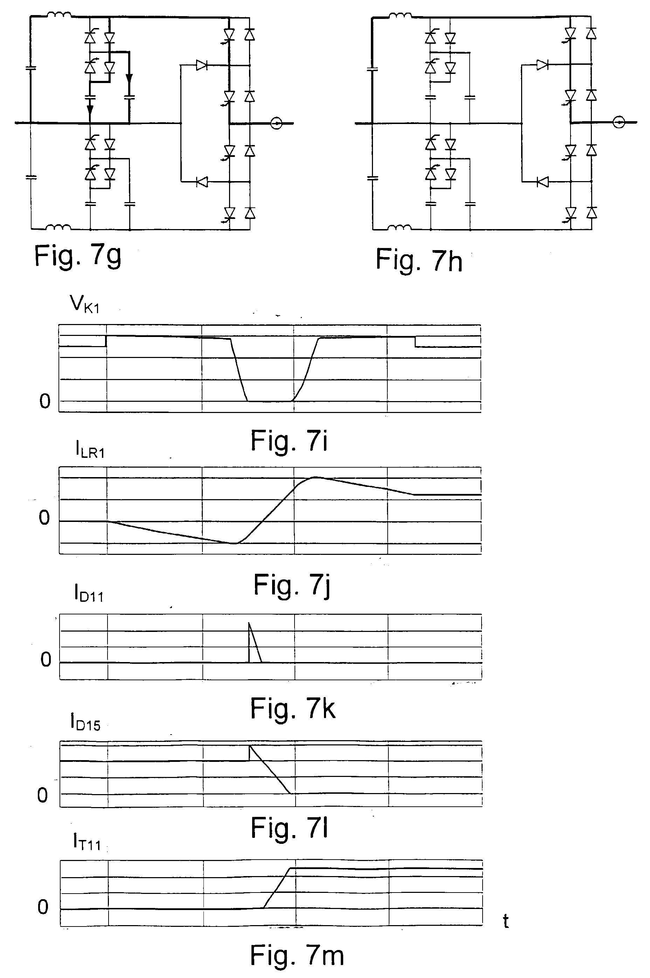

Der Ablauf der Kommutierung (d), welche mit Hilfe des Entkopplungsnetzwerkes 1 der oberen Brückenhälfte durchgeführt wird, und wesentliche Strom- und Spannungsverläufe sind in den Fig. 7a-m dargestellt. Im einzelnen gilt folgendes:
- Fig. 7a:: Vor der Kommutierung
- Fig. 7b:: Resonante Induktivität L_{R1} laden
- Fig. 7c:: Resonanter Entladevorgang von C_{R1}
- Fig. 7d:: Linearer Abbau des resonanten Stromes über eine NPC-Diode (Einschalten von T₁₁)
- Fig. 7e: Kommutierung des Laststromes
- Fig. 7f: Resonanter Ladevorgang von C_{R1}
- Fig. 7g: Entladen der resonanten Induktivität
- Fig. 7h:: Nach abgeschlossener Kommutierung
- Fig. 7i:: Spannungsverlauf von Vₖ₁
- Fig. 7j:: Stromverlauf von I_{LR1}
- Fig. 7k:: Stromverlauf von I_{D11}
- Fig. 7l:: Stromverlauf von I_{D15}
- Fig. 7m:: Stromverlauf von I_{T11}

Für den Start des Kommutierungsvorganges werden wiederum die Schalter der oberen Brückenhälfte T_{C1} und T_{R1} eingeschaltet, L_{R1} geladen und nach Ausschalten von T_{C1} C_{R1} in einem Schwingungsvorgang bis Nullspannung entladen. Der resonante Strom kommutiert dann von C_{R1} und T_{R1} auf D₁₅ und D₁₁ und wird linear abgebaut. Während des Leitens von D₁₁ kann T₁₁ verlustarm eingeschaltet werden, worauf mit Stromnulldurchgang in L_{R1} der Laststrom durch L_{R1} begrenzt von D₁₅ auf T₁₁ kommutiert. Nach abgeschlossener Kommutierung des Laststromes wird C_{R1} durch einen Rückschwingvorgang wieder auf die Spannung von C_{C1} geladen und abschließend der resonante Stromanteil in L_{R1} durch C_{C1} abgebaut.

Durch Überlappung der Kommutierungsvorgänge (a) und (b), sowie (c) und (d) sind auch verlustarme Kommutierungen direkt vom oberen auf den unteren Brückenzweig realisierbar, wobei hierzu beide Entkopplungsnetzwerke 1, 2 eingesetzt werden.

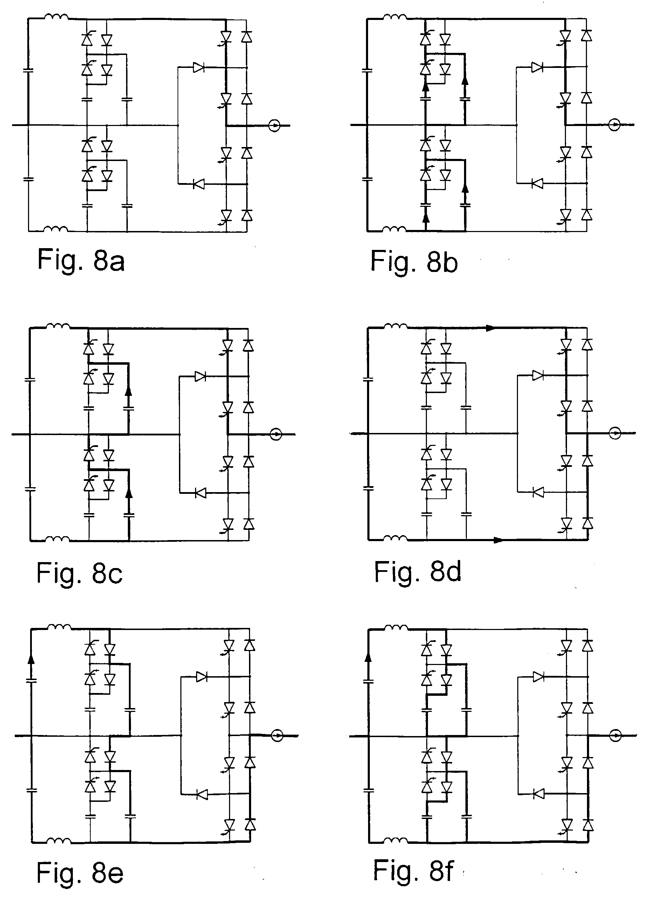

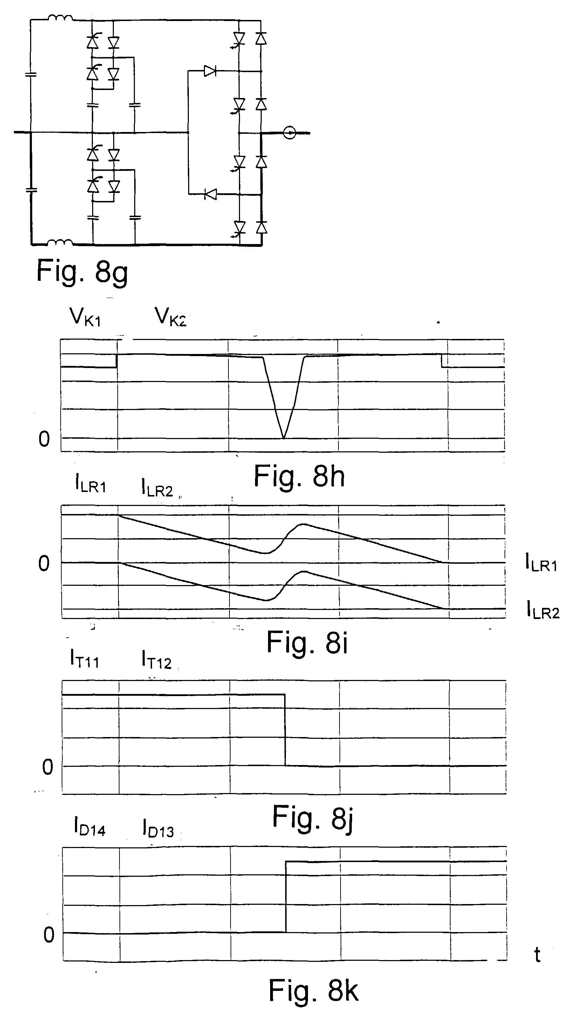

Der Ablauf der Kommutierung von T₁₁ und T₁₂ nach D₁₄ und D₁₃ und wesentliche Strom- und Spannungsverläufe sind in den Fig. 8a-k dargestellt. Im einzelnen gilt folgendes:
- Fig. 8a:: Vor der Kommutierung
- Fig. 8b:: Resonante Induktivitäten laden
- Fig. 8c:: Resonanter Entladevorgang von C_{R1} und C_{R2}
- Fig. 8d:: Linearer Abbau des resonanten Stromes vor dem Ausschalten von T₁₁ und T₁₂
- Fig. 8e:: Resonanter Ladevorgang von C_{R1} und C_{R2}
- Fig. 8f:: Entladen der resonanten Induktivitäten
- Fig. 8g:: Nach abgeschlossener Kommutierung
- Fig. 8h:: Spannungsverlauf von Vₖ₁ und Vₖ₂
- Fig. 8i:: Stromverlauf von I_{LR1} und I_{LR2}
- Fig. 8j:: Stromverlauf von I_{T11} und I_{T12}
- Fig. 8k:: Stromverlauf von I_{D14} und I_{D13}

Der Ladevorgang der resonanten Induktivitäten L_{R1} und L_{R2} sowie der anschließende Schwingungsvorgang laufen synchron ab, so daß die Spannungen Vₖ₁ und Vₖ₂ zum gleichen Zeitpunkt null erreichen. Daraufhin kommutiert der resonante Strom auf den Pfad D₁₄, D₁₃, T₁₂ und T₁₁, gegebenenfalls auch auf D₁₆ und D₁₅. Jetzt werden T₁₁ und T₁₂ verlustarm ausgeschaltet und der Laststrom kommutiert nahezu augenblicklich auf D₁₃ und D₁₄. Der Strom I_{LR1} kommutiert im gleichen Augenblick auf D_{R1} und C_{R1} und die Differenz aus dem Laststrom und dem Strom I_{LR2} kommutiert auf D_{R2} und C_{R2}. Mit dem dadurch eingeleiteten Rückschwingvorgang und dem Entladen von L_{R1} und L_{R2} findet der Kommutierungsvorgang seinen Abschluß.

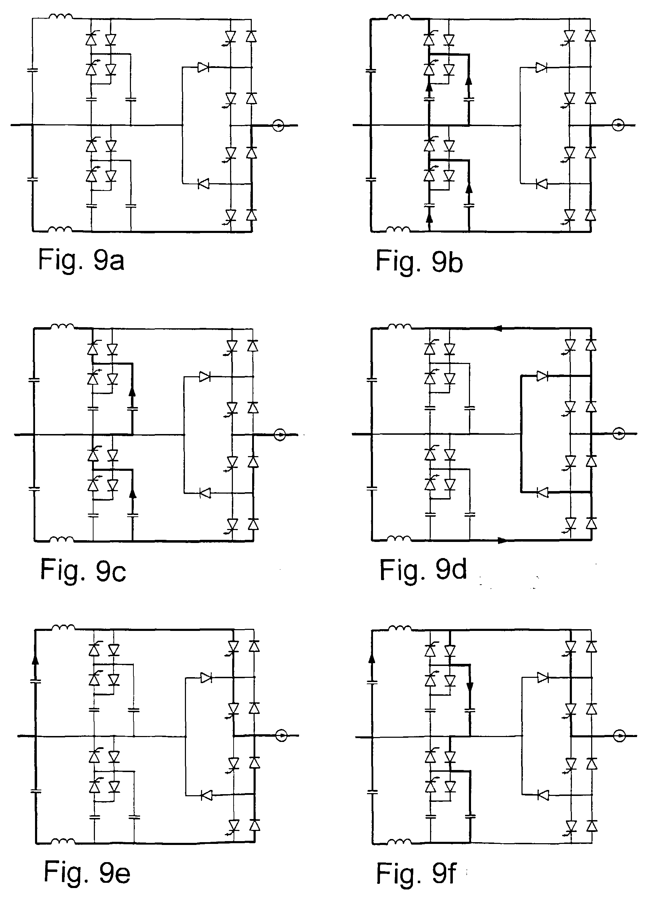

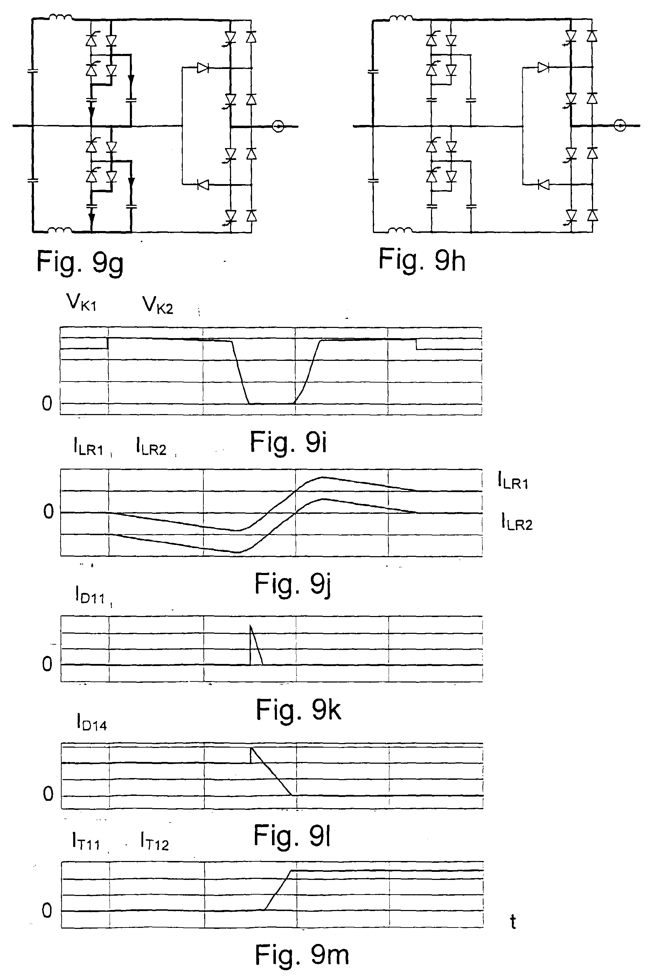

Die Kommutierung von D₁₄ und D₁₃ nach T₁₁ und T₁₂ ist in den Fig. 9a-m dargestellt. Im einzelnen gilt folgendes:
- Fig. 9a:: Vor der Kommutierung
- Fig. 9b:: Resonante Induktivitäten laden
- Fig. 9c:: Resonanter Entladevorgang von C_{R1} und C_{R2}
- Fig. 9d:: Linearer Abbau des resonanten Stromes (Einschalten von T₁₁ und T₁₂)
- Fig. 9e:: Kommutierung des Laststromes
- Fig. 9f:: Resonanter Ladevorgang von C_{R1} und C_{R2}
- Fig. 9g:: Entladen der resonanten Induktivitäten
- Fig. 9h:: Nach abgeschlossener Kommutierung
- Fig. 9i:: Spannungsverlauf von Vₖ₁ und Vₖ₂
- Fig. 9j:: Stromverlauf von I_{LR1} und I_{LR2}
- Fig. 9k:: Stromverlauf von I_{D11}
- Fig. 9l:: Stromverlauf von I_{D14}
- Fig. 9m:: Stromverlauf von I_{T11} und I_{T12}

Die Kommutierung beginnt mit dem gleichzeitigen Laden von L_{R1} und L_{R2} und dem gleichzeitigen resonanten Entladen von C_{R1} und C_{R2}. Mit dem Erreichen von Nullspannung kommutiert der resonante Strom auf den Pfad D₁₄, D₁₃ und D₁₂ parallel zu D₁₆ und D₁₅, sowie D₁₁ und wird linear abgebaut. Jetzt können T₁₁ und T₁₂ verlustarm eingeschaltet werden, so daß nach Stromnulldurchgang in L_{R1} der Laststrom durch L_{R1} und L_{R2} begrenzt von D₁₄ und D₁₃ auf T₁₁ und T₁₂ kommutieren kann. Anschließend werden durch den gleichzeitigen Rückschwingvorgang C_{R1} und C_{R2} auf die Spannungen von C_{C1} bzw. C_{C2} geladen und daraufhin der resonante Strom in L_{R1} und L_{R2} linear abgebaut. Damit ist der Kommutierungsvorgang beendet.

Die Kommutierungen lassen sich allgemein je nach dem Leistungsgradienten der Momentanleistung der Stromrichterphase in eine Kommutierung mit positivem Leistungsgradienten und eine Kommutierung mit negativem Leistungsgradienten unterscheiden.

Bei Kommutierungen mit positivem Leistungsgradienten ist die Momentanleistung der Stromrichterausgangsphase nach der Kommutierung größer als vor der Kommutierung. Bei Kommutierungen mit negativem Leistungsgradienten ist die Momentanleistung nach der Kommutierung kleiner als vor der Kommutierung. Diese Kommutierungsvorgänge sind kürzer als die Kommutierungen mit positivem Leistungsgradienten. Bei Kommutierungen mit negativem Leistungsgradienten schaltet ein aktives Bauelement (GTO, IGCT oder IGBT) den Phasenstrom ab. Infolgedessen kommutiert der Strom nahezu augenblicklich vom aktiv ausschaltenden Bauelement zu der den Strom übernehmenden Diode. Die Anfangsbedingung für den Rückschwingvorgang ist in diesem Fall von der Höhe des Laststromes abhängig. Bei Kommutierungen mit positivem Leistungsgradienten wird die Kommutierungsdauer (di/dt) durch die Zwischenkreisspannung und die Resonanzinduktivität bestimmt. Die Anfangsbedingung für den Rückschwingvorgang ist null.

Während der ersten Phase aller Kommutierungsvorgänge, dem Laden von L_{R1} bzw. L_{R2}, wird Energie aus der Ladekapazität C_{C1} bzw. C_{C2} an die jeweilige resonante Induktivität und den Zwischenkreis abgegeben. Die Spannung über C_{C1} bzw. C_{C2} sinkt geringfügig ab. Beim Entladen der resonanten Induktivitäten zum Abschluß der Kommutierungsvorgänge wird Energie in C_{C1} bzw. C_{C2} zurückgespeist. Die Menge der rückgespeisten Energie ist dabei vom Typ der Kommutierung und der Größe des Laststromes abhängig. Um die Spannung über C_{C1} bzw. C_{C2} auf 1.2*V_{dc}/2 konstant zu halten, wird eine Regelung eingesetzt. Bei erhöhter Spannung kann mittels verlängerter Ladephase der resonanten Induktivität zu Beginn jeder Kommutierung zusätzliche Energie abgegeben und die Spannung gesenkt werden.

Andererseits durch kann eine Überlappungsphase beim Schalten der Hauptschalter zusätzliche Energie in C_{C1} bzw. C_{C2} gespeichert und die Spannung erhöht werden. Am Beispiel des Kommutierungsvorganges (a) bedeutet dies, daß mit dem Erreichen von Nullspannung über C_{R1} T₁₃ sofort eingeschaltet, T₁₁ aber erst verzögert ausgeschaltet wird. Damit wird in L_{R1} zusätzlicher Strom aufgebaut, der den Rückschwingvorgang so beeinflußt, daß die Ladekapazität C_{C1} nach Abschluß des gesamten Schwingungsvorganges mehr Energie speichert.

## Patentansprüche

1. Dreipunkt-Stromrichter mit NPC-Dioden zwischen den Brückenhälften und der Mittelanzapfung des Zwischenkreises, dadurch gekennzeichnet, daß ein Entkopplungsnetzwerk (1) für die obere Brückenhälfte vorgesehen ist, dessen erster Eingang am positiven Pol des Zwischenkreises liegt und dessen erster Ausgang mit dem positiven Pol des Dreipunkt-Stromrichters verbunden ist, daß ein Entkopplungsnetzwerk (2) für die untere Brückenhälfte vorgesehen ist, dessen zweiter Eingang am negativen Pol des Zwischenkreises liegt und dessen zweiter Ausgang mit dem negativen Pol des Dreipunkt-Stromrichters verbunden ist, daß die übrigen Eingänge der Entkopplungsnetzwerke (1, 2) an die Mittelanzapfung (3) des Zwischenkreises angeschlossen sind und die übrigen Ausgänge der Entkopplungsnetzwerke (1, 2) über die NPC-Dioden mit den Brückenhälften verbunden sind, wobei durch die Entkopplungsnetzwerke (1, 2) die Kommutierungsspannung für die Hauptschalter (T₁₁...T₃₄, D11...D36) in der oberen und der unteren Brückenhälfte unabhängig voneinander von der halben Zwischenkreisspannung (V_{dc}/2) entkoppelt wird.

2. Dreipunkt-Stromrichter nach Anspruch 1, dadurch gekennzeichnet, daß das Entkopplungsnetzwerk (1) der oberen Brückenhälfte eine zwischen erstem Eingang und erstem Ausgang angeordnete resonante Induktivität (L_{R1}) aufweist, wobei an den ersten Ausgang ein erster Schalter (T_{R1}) und eine erste Inversdiode (D_{R1}) angeschlossen sind, daß erster Schalter (T_{R1}) und erste Inversdiode (D_{R1}) andererseits mit einem zweiten Schalter (T_{C1}) und einer zweiten Inversdiode (D_{C1}) verbunden sind, daß zweiter Schalter (T_{C1}) und zweite Inversdiode (D_{C1}) andererseits mit einer Ladekapazität (C_{C1}) verbunden sind, daß an den gemeinsamen Verbindungspunkt beider Schalter und Inversdioden eine resonante Kapazität (C_{R1}) angeschlossen ist und daß Ladekapazität (C_{C1}) und resonante Kapazität (C_{R1}) andererseits am zweiten Eingang/zweiten Ausgang liegen.

3. Dreipunkt-Stromrichter nach Anspruch 1, dadurch gekennzeichnet, daß das Entkopplungsnetzwerk (2) der unteren Brückenhälfte eine zwischen zweitem Eingang und zweitem Ausgang angeordnete resonante Induktivität (L_{R2}) aufweist, daß an den ersten Eingang/ersten Ausgang ein erster Schalter (T_{R2}) und eine erste Inversdiode (D_{R2}) angeschlossen sind, daß erster Schalter (T_{R2}) und erste Inversdiode (D_{R2}) andererseits mit einem zweiten Schalter (T_{C2}) und einer zweiten Inversdiode (D_{C2}) verbunden sind, daß zweiter Schalter (T_{C2}) und zweite Inversdiode (D_{C2}) andererseits mit einer Ladekapazität (C_{C2}) verbunden sind, daß an den gemeinsamen Verbindungspunkt beider Schalter und Inversdioden eine resonante Kapazität (C_{R2}) angeschlossen ist und daß Ladekapazität (C_{C2}) und resonante Kapazität (C_{R2}) andererseits am zweiten Ausgang liegen.

4. Verfahren zum Betrieb des Dreipunkt-Stromrichters nach Anspruch 1, dadurch gekennzeichnet, daß bei Kommutierungen von der oberen Brückenhälfte auf die Mittelanzapfung (3) und zurück (+ ↔ 0) das obere Entkopplungsnetzwerk (1) und die jeweilige NPC-Diode (D₁₅...D₃₅) sowie für Kommutierungen von der Mittelanzapfung (3) auf die untere Brückenhälfte und zurück (0 ↔ -) das untere Entkopplungsnetzwerk (2) und die jeweilige NPC-Diode (D₁₆...D₃₆) genutzt werden.

5. Verfahren zum Betrieb des Dreipunkt-Stromrichters nach Anspruch 1, dadurch gekennzeichnet, daß bei Kommutierungen von der oberen Brückenhälfte auf die untere Brückenhälfte und zurück (+ ↔ -) das obere Entkopplungsnetzwerk (1) und das untere Entkopplungsnetzwerk (2) gemeinsam genutzt werden.
